(19) Europäisches Patentamt / European Patent Office / Office européen des brevets

(11) EP 2 787 818 B1

(12) **EUROPEAN PATENT SPECIFICATION**

(45) Date of publication and mention of the grant of the patent: **21.06.2017 Bulletin 2017/25**

(21) Application number: **12854788.2**

(22) Date of filing: **05.12.2012**

(51) Int Cl.:
***A01N 43/40** (2006.01)* ***A01N 25/32** (2006.01)*
***A01P 13/02** (2006.01)*

(86) International application number: **PCT/US2012/067937**

(87) International publication number: **WO 2013/085988 (13.06.2013 Gazette 2013/24)**

(54) **HERBICIDAL COMPOSITION COMPRISING CERTAIN ESTERS OR THE POTASSIUM SALT OF 4-AMINO-6-(4-CHLORO-2-FLUORO-3-METHOXYPHENYL)PYRIDINE-2-CARBOXYLIC ACID AND THE DIMETHYL AMINE SALT OF (2,4-DICHLOROPHENOXY)ACETIC ACID**

HERBIZIDZUSAMMENSETZUNG MIT BESTIMMTEN 4-AMINO-6-(4-CHLOR-2-FLUOR-3-METHOXYPHENYL)PYRIDIN-2-CARBONSÄUREESTERN ODER DER KALIUMSALZ VON 4-AMINO-6-(4-CHLOR-2-FLUOR-3-METHOXYPHENYL)PYRIDIN-2-CARBONSÄURE UND DER DIMETHYLAMINSALZ VON (2,4-DICHLORPHENOXY)ESSIGSÄURE

COMPOSITION HERBICIDE COMPRENANT CERTAIN ESTERS OU LE SEL DE POTASSIUM DE L'ACIDE 4-AMINO-6-(4-CHLORO-2-FLUORO-3-MÉTHOXYPHÉNYL)PYRIDINE-2-CARBOXYLIQUE ET LE SEL DE DIMÉTHYLAMINE DE L'ACIDE (2,4-DICHLOROPHÉNOXY)ACÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2011 US 201161567419 P**

(43) Date of publication of application: **15.10.2014 Bulletin 2014/42**

(73) Proprietor: **Dow AgroSciences LLC**
**Indianapolis, IN 46268 (US)**

(72) Inventors:
- **OVALLE, Daniel**
  **Bogota (CO)**
- **CARRANZA GARZON, Nelson, M.**
  **Ibague (CO)**
- **ROJAS-CALVO, Carlos, E.**
  **Guadalajara, CP 45238 (MX)**
- **PANIAGUA, Leonardo**
  **E-28042 Madrid (ES)**
- **REICHERT, Alberto**
  **Veracruz, 91919 (MX)**
- **MASTERS, Robert A.**
  **Zionsville, IN 46077 (US)**

(74) Representative: **f & e patent**
**Fleischer, Engels & Partner mbB, Patentanwälte**
**Braunsberger Feld 29**
**51429 Bergisch Gladbach (DE)**

(56) References cited:
**WO-A2-2009/029518** **US-A- 4 948 421**
**US-A1- 2011 190 130** **US-A1- 2011 287 932**
**US-A1- 2011 287 934** **US-B2- 7 314 849**

- **Wolfgang Krämer and Ulrich Schirmer: "Modern Crop Protection Compounds", 2016, Wiley-VCH Verlag GmbH and Co. KGaA vol. 3 * pages 1239 and 1249 ***
- **GERALD R. STEPHENSON ET AL.: "Glossary of terms relating to pesticides", GLOSSARY OF PESTICIDES, vol. 78, no. 11, 2006,**
- **"Common and Chemical names of herbicides approved by the Weed Science Society of America", WEED SCIENCE, vol. 58, 2010,**
- **"Structures, Overview and Mechanisms of Commercial safeners" In: 2016 * pages 261, 265, 275 ***
- **"Glossary of Pesticide Chemicals, FDA", June 2005 (2005-06) * 1, 2, 4 ***

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

- KOMIVES, T.. AND HATZIOS, K.: "Chemistry and structure-activity relationships of herbicide safeners", Z. NATURFORSCH., vol. 46c, 1991, pages 798-804,
- JOANNA DAVIES: "Herbicide safeners-commercial products and tools for agrochemical research", SAFENERS, February 2001 (2001-02), pages 10-15,
- DUTKA, F. AND KOMIVES, T.: "MG-191: a new selective herbicide antidote", HERBICIDE ANTIDOTES, 2016, - 2016, pages 201-204,

## Description

### Field

Provided herein are herbicidal compositions comprising (a) the benzyl ester, methyl ester, or potassium salt of 4-amino-3-chloro-6-(4-chloro-2-fluoro-3-methoxyphenyl)pyridine-2-carboxylic acid and (b) the dimethyl amine salt of (2,4-dichlorophenoxy)acetic acid (2,4-D) for controlling weeds in crops or other settings, e.g. in wheat, rye, barley, oats, triticale, rice, turf, pastures, rangelands, cereals, oil seed rape, and industrial vegetation management (IVM), wherein the carboxylic acid equivalent weight ratio of the benzyl ester, methyl ester, or potassium salt of the compound of formula (I) to the dimethyl amine salt of 2,4-D is less than 1:10. These compositions provide improved herbicidal weed control.

### Background

The protection of crops from weeds and other vegetation which inhibit crop growth is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use.

US 2011/0287932 A1 and US 2011/0287934 A1 concern herbicidal compositions for tolerant or resistant cereal and rice crops, respectively, comprising glufosinate or bialaphos or a derivative thereof in combination with at least one further herbicide. Among others, these documents disclose a ternary combination comprising glufosinate-ammonium, halauxifen-methyl and 2,4-D, wherein halauxifen-methyl and 2,4-D are applied in a ratio of 1:5, based on their respective application rates given in gai/ha. However, both documents are silent on any herbicidal effect of mixtures containing the benzyl ester, methyl ester, or potassium salt of halauxifen and the dimethylamine salt of 2,4-D, but no glufosinate, or a different weight ratio of halauxifen-methyl and 2,4-D, respectively.

In some cases, herbicidal active ingredients have been shown to be more effective in combination than when applied individually and this is referred to as "synergism." As described in the Herbicide Handbook of the Weed Science Society of America, Ninth Edition, 2007, p. 429, "'synergism' [is] an interaction of two or more factors such that the effect when combined is greater than the predicted effect based on the response of each factor applied separately." The present disclosure is based in part on the discovery that 2,4-D and certain pyridine carboxylic acids, already known individually for their herbicidal efficacy, display a synergistic effect when applied in combination.

### Summary

Provided herein are herbicidal compositions comprising a herbicidally effective amount of (a) the benzyl ester, methyl ester, or potassium salt of a pyridine carboxylic acid of the formula (I),

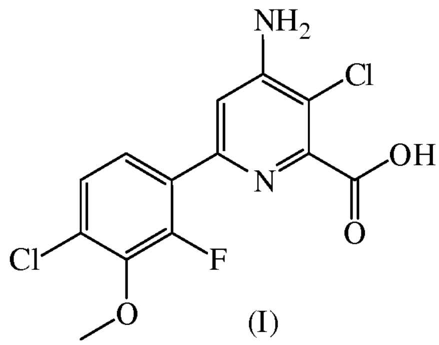

(I)

,

and (b) the dimethyl amine salt of 2,4-D wherein the carboxylic acid equivalent weight ratio of the benzyl ester, methyl ester, or potassium salt of the compound of formula (I) to the dimethyl amine salt of 2,4-D is less than 1:10. Further provided are herbicidal compositions consisting of a herbicidally effective amount of (a) the benzyl ester, methyl ester, or potassium salt of the pyridine carboxylic acid of formula (I), and (b) the dimethyl amine salt of 2,4-D, and optionally one or more other herbicides according to claim 2, optionally a herbicide safener, optionally an agriculturally acceptable adjuvant or carrier, optionally one- or more surface-active agents, optionally other additives selected from the group consisting of compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, and antimicrobial agents, and optionally liquid fertilizers or solid, particulate fertilizer carriers.

In some embodiments, the compositions contain an agriculturally acceptable adjuvant or carrier. In some embodiments, the compositions are employed in combination with known herbicide safeners, including, but not limited to, cloquintocet-mexyl.

The species spectra of the pyridine carboxylic acid of formula (I) and esters, amides, and salts thereof and 2,4-D and esters, amides, and salts thereof, i.e., the weed species which the respective compounds control, is broad and highly complementary. For example, it has been found that in certain embodiments, the compositions provided herein exhibit a synergistic action in the control of escoba blanca (*Melochia parviflora* L; MEOPA), goosegrass (*Eleusine indica* (L.) Gaertn.; ELEIN), Italian ryegrass (*Lolium perenne* L. ssp. *multiflorum* (Lam.) Husnot; LOLMU), and fall panicum (*Panicum dichotomiflorum* Michx.; PANDI) at application rates equal to and lower than the rates of the individual compounds.

Detailed Description

A number of pyridine carboxylic acid compounds are described in U.S. Patent 7,314,849 (B2), including 4-amino-3-chloro-6-(4-chloro-2-fluoro-3-methoxyphenyl)pyridine-2-carboxylic acid (I), which has the following structure:

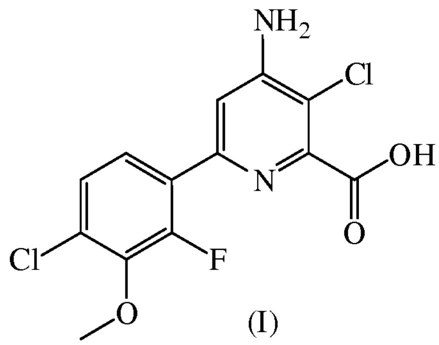

(I) .

The methyl ester is described by the halauxifen-methyl. The compound of formula I or esters, salts, or amides thereof control annual grass weeds including *Setaria*, *Pennisetum,* and *Echinochloa*; broadleaf weeds such as *Papaver, Galium, Lamium, Kochia, Amaranthus, Aeschynomene, Sesbania*, and *Monochoria*; and sedge species such as *Cyperus* and *Scirpus.*

2,4-D is the common name for (2,4-dichlorophenoxy)acetic acid. Its herbicidal activity is described in The Pesticide Manual, Fifteenth Edition, 2009. 2,4-D provides post-emergence control of annual and perennial broadleaf weeds in a variety of crops. An exemplary 2,4-D salt is the dimethylamine salt.

Provided herein are compounds comprising or methods of controlling undesirable vegetation according to the claims comprising utilizing (a) the benzyl ester, methyl ester, or potassium salt of the compound of formula (I) and (b) the dimethyl amine salt of 2,4 D. In certain embodiments, the methyl ester of the compound of formula (I) is utilized. In some embodiments, the benzyl ester of the compound of formula (I) is utilized. In some embodiments, the potassium salt of the compound of formula (I) is utilized.

The term herbicide is used herein to mean an active ingredient that kills, controls or otherwise adversely modifies the growth of plants. A herbicidally effective or vegetation controlling amount is an amount of active ingredient which causes an adversely modifying effect and includes deviations from natural development, killing, regulation, desiccation, and retardation. The terms plants and vegetation include germinant seeds, emerging seedlings, plants emerging from vegetative propagules, and established vegetation.

Herbicidal activity is exhibited by the compounds of the compositions and methods when they are applied directly to the plant or to the locus of the plant, i.e., area adjacent to the plant, at any stage of growth. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, and the soil type, as well as the amount of chemical applied. These and other factors can be adjusted as is known in the art to promote non-selective or selective herbicidal action. In some embodiments, the compositions described herein are applied as a post-emergence application, pre-emergence application, or in-water application, e.g., to flooded paddy rice or water bodies (e.g., ponds, lakes and streams), to relatively immature undesirable vegetation to achieve the maximum control of weeds. In certain embodiments, the compositions and methods are applied via burn-down.

In some embodiments, the compositions and methods provided herein are utilized to control weeds in crops, including but not limited to cereals, rice, perennial plantation crops, corn, sorghum, turf, range and pasture, industrial

vegetation management (IVM), rights-of-way and in any auxinic-tolerant crops. In some embodiments, the compositions and methods are utilized to control weeds in cereals or oil seed rape.

The compositions and methods described herein can be used to control undesirable vegetation in glyphosate-tolerant-, glufosinate-tolerant-, dicamba-tolerant-, phenoxy auxin-tolerant-, pyridyloxy auxin-tolerant-, aryloxyphenoxypropionate-tolerant-, acetyl CoA carboxylase (ACCase) inhibitor-tolerant-, imidazolinone-tolerant-, acetolactate synthase (ALS) inhibitor-tolerant-, 4-hydroxyphenyl-pyruvate dioxygenase (HPPD) inhibitor-tolerant-, protoporphyrinogen oxidase (PPO) inhibitor-tolerant-, triazine-tolerant- and bromoxynil-tolerant crops, for example, in conjunction with glyphosate, glufosinate, dicamba, phenoxy auxins, pyridyloxy auxins, aryloxyphenoxypropionates, ACCase inhibitors, imidazolinones, ALS inhibitors, HPPD inhibitors, PPO inhibitors, triazines, and bromoxynil. The compositions and methods may be used in controlling undesirable vegetation in crops possessing multiple or stacked traits conferring tolerance to multiple chemistries and/or inhibitors of multiple modes of action. In some embodiments, the above ester or salt of compound of formula I, and the above 2,4-D salt, and a complementary herbicide or salt or ester thereof are used in combination with herbicides that are selective for the crop being treated and which complement the spectrum of weeds controlled by these compounds at the application rate employed. In some embodiments, the compositions described herein and other complementary herbicides are applied at the same time, either as a combination formulation or as a tank mix.

In some embodiments, the compositions and methods provided herein are utilized to control undesirable vegetation in cereals. In certain embodiments, the undesirable vegetation is *Alopecurus myosuroides* Huds. (blackgrass, ALOMY), *Apera spica-venti* (L.) Beauv. (windgrass, APESV), *Avena fatua* L. (wild oat, AVEFA), *Bromus tectorum* L. (downy brome, BROTE), *Lolium multiflorum* Lam. (Italian ryegrass, LOLMU), *Phalaris minor* Retz. (littleseed canarygrass, PHAMI), *Poa annua* L. (annual bluegrass, POANN), *Setaria pumila* (Poir.) Roemer & J.A. Schultes (yellow foxtail, SETLU), *Setaria viridis* (L.) Beauv. (green foxtail, SETVI), *Cirsium arvense* (L.) Scop. (Canada thistle, CIRAR), *Galium aparine* L. (catchweed bedstraw, GALAP), *Kochia scoparia* (L.) Schrad. (kochia, KCHSC), *Lamium purpureum* L. (purple deadnettle , LAMPU), *Matricaria recutita* L. (wild chamomile, MATCH), *Matricaria matricarioides* (Less.) Porter (pineappleweed, MATMT), *Papaver rhoeas* L. (common poppy, PAPRH), *Polygonum convolvulus* L. (wild buckwheat, POLCO), *Salsola tragus* L. (Russian thistle, SASKR), *Stellaria media* (L.) Vill. (common chickweed, STEME), *Veronica persica* Poir. (Persian speedwell, VERPE), *Viola arvensis* Murr. (field violet, VIOAR), or *Viola tricolor* L. (wild violet, VIOTR).

In some embodiments, the compositions and methods provided herein are utilized to control undesirable vegetation in range and pasture, IVM and rights of way. In certain embodiments, the undesirable vegetation is *Ambrosia artemisiifolia* L. (common ragweed, AMBEL), *Cassia obtusifolia* (sickle pod, CASOB), *Centaurea maculosa* auct. non Lam. (spotted knapweed, CENMA), *Cirsium arvense* (L.) Scop. (Canada thistle, CIRAR), *Convolvulus arvensis* L. (field bindweed, CONAR), *Euphorbia esula* L. (leafy spurge, EPHES), *Lactuca serriola* L./Torn. (prickly lettuce, LACSE), *Melochia parviflora* (escoba blanca, MEOPA), *Plantago lanceolata* L. (buckhorn plantain, PLALA), *Rumex obtusifolius* L. (broadleaf dock, RUMOB), *Sida spinosa* L. (prickly sida, SIDSP), *Sinapis arvensis* L. (wild mustard, SINAR), *Sonchus arvensis* L. (perennial sowthistle, SONAR), *Solidago* species (goldenrod, SOOSS), *Taraxacum officinale* G.H. Weber ex Wiggers (dandelion, TAROF), *Trifolium repens* L. (white clover, TRFRE), or *Urtica dioica* L. (common nettle, URTDI).

In some embodiments, the compositions and methods provided herein are utilized to control undesirable vegetation in rice. In certain embodiments, the undesirable vegetation is *Brachiaria platyphylla* (Groseb.) Nash (broadleaf signalgrass, BRAPP), *Digitaria sanguinalis* (L.) Scop. (large crabgrass, DIGSA), *Echinochloa crus-galli* (L.) P. Beauv. (barnyardgrass, ECHCG), *Echinochloa colonum* (L.) LINK (junglerice, ECHCO), *Echinochloa oryzoides* (Ard.) Fritsch (early watergrass, ECHOR), *Echinochloa oryzicola* (Vasinger) Vasinger (late watergrass, ECHPH), *Ischaemum rugosum* Salisb. (saramollagrass, ISCRU), *Leptochloa chinensis* (L.) Nees (Chinese sprangletop, LEFCH), *Leptochloa fascicularis* (Lam.) Gray (bearded sprangletop, LEFFA), *Leptochloa panicoides* (Presl.) Hitchc. (Amazon sprangletop, LEFPA), *Panicum dichotomiflorum* (L.) Michx. (fall panicum, PANDI), *Paspalum dilatatum* Poir. (dallisgrass, PASDI), *Cyperus difformis* L. (smallflower flatsedge, CYPDI), *Cyperus esculentus* L. (yellow nutsedge, CYPES), *Cyperus iria* L. (rice flatsedge, CYPIR), *Cyperus rotundus* L. (purple nutsedge, CYPRO), *Eleocharis* species (ELOSS), *Fimbristylis miliacea* (L.) Vahl (globe fringerush, FIMMI), *Schoenoplectus juncoides* Roxb. (Japanese bulrush, SPCJU), *Schoenoplectus maritimus* L. (sea clubrush, SCPMA), *Schoenopdectus mucronatus* L. (ricefield bulrush, SCPMU), *Aeschynomene* species, (jointvetch, AESSS), *Alternanthera philoxeroides* (Mart.) Griseb. (alligatorweed, ALRPH), *Alisma plantago-aquatica* L. (common waterplantain, ALSPA), *Amaranthus* species, (pigweeds and amaranths, AMASS), *Ammannia coccinea* Rottb. (redstem, AMMCO), *Eclipta alba* (L.) Hassk. (American false daisy, ECLAL), *Heteranthera limosa* (SW.) Willd./Vahl (ducksalad, HETLI), *Heteranthera reniformis* R. & P. (roundleaf mudplantain, HETRE), *Ipomoea hederacea* (L.) Jacq. (ivyleaf morningglory, IPOHE), *Lindernia dubia* (L.) Pennell (low false pimpernel, LIDDU), *Monochoria korsakowii* Regel & Maack (monochoria, MOOKA), *Monochoria vaginalis* (Burm. F.) C. Presl ex Kuhth, (monochoria, MOOVA), *Murdannia nudiflora* (L.) Brenan (doveweed, MUDNU), *Polygonum pensylvanicum* L., (Pennsylvania smartweed, POLPY), *Polygonum persicaria* L. (ladysthumb, POLPE), *Polygonum hydropiperoides* Michx. (POLHP, mild smartweed), *Rotala indica* (Willd.) Koehne (Indian toothcup, ROTIN), *Sagittaria* species, (arrowhead, SAGSS), *Sesbania exaltata* (Raf.) Cory/Rydb. Ex Hill (hemp sesbania, SEBEX), or *Sphenoclea zeylanica* Gaertn. (gooseweed, SPDZE).

In certain embodiments, the undesirable vegetation is *Alopecurus myosuroides* Huds. (blackgrass, ALOMY), *Avena fatua* L. (wild oat, AVEFA), *Brachiaria platyphylla* (Groseb.) Nash (broadleaf signalgrass, BRAPP), *Digitaria sanguinalis* (L.) Scop. (large crabgrass, DIGSA), *Echinochloa crus-galli* (L.) P. Beauv. (barnyardgrass, ECHCG), *Echinochloa colonum* (L.) Link (junglerice, ECHCO), *Lolium mudtiflorum* Lam. (Italian ryegrass, LOLMU), *Panicum dichotomiflorum* Michx. (fall panicum, PANDI), *Panicum miliaceum* L. (wild-proso millet, PANMI), *Setaria faberi* Herrm. (giant foxtail, SETFA), *Setaria viridis* (L.) Beauv. (green foxtail, SETVI), *Sorghum halepense* (L.) Pers. (Johnsongrass, SORHA), *Sorghum bicolor* (L.) Moench ssp. *Arundinaceum* (shattercane, SORVU), *Cyperus esculentus* L. (yellow nutsedge, CYPES), *Cyperus rotundus* L. (purple nutsedge, CYPRO), *Abutilon theophrasti* Medik. (velvetleaf, ABUTH), *Amaranthus* species (pigweeds and amaranths, AMASS), *Ambrosia artemisiifolia* L. (common ragweed, AMBEL), *Ambrosia psilostachya* DC. (western ragweed, AMBPS), *Ambrosia trifida* L. (giant ragweed, AMBTR), *Asclepias syriaca* L. (common milkweed, ASCSY), *Chenopodium album* L. (common lambsquarters, CHEAL), *Cirsium arvense* (L.) Scop. (Canada thistle, CIRAR), *Commedina benghalensis* L. (tropical spiderwort, COMBE), *Datura stramonium* L. (jimsonweed, DATST), *Daucus carota* L. (wild carrot, DAUCA), *Euphorbia heterophylla* L. (wild poinsettia, EPHHL), *Erigeron bonariensis* L. (hairy fleabane, ERIBO), *Erigeron canadensis* L. (Canadian fleabane, ERICA), *Helianthus annuus* L. (common sunflower, HELAN), *Jacquemontia tamnifolia* (L.) Griseb. (smallflower morningglory, IAQTA), *Ipomoea hederacea* (L.) Jacq. (ivyleaf morningglory, IPOHE), *Ipomoea lacunosa* L. (white morningglory, IPOLA), *Lactuca serriola* L./Torn. (prickly lettuce, LACSE), *Portulaca oleracea* L. (common purslane, POROL), *Sida spinosa* L. (prickly sida, SIDSP), *Sinapis arvensis* L. (wild mustard, SINAR), *Solanum ptychanthum* Dunal (eastern black nightshade, SOLPT), or *Xanthium strumarium* L. (common cocklebur, XANST).

In some embodiments, the compositions are used to control GALAP, LAMAM, GAETE, CHEAL, DESSO, PAPRH, GALAP, STEME, GERSS, LAMSS, VERPE, PAPRH, ERIBO, ERICA, Conyza, GLXMA, or CHEAL.

In some embodiments, the compositions and methods provided herein are utilized to control undesirable vegetation consisting of grass, broadleaf and sedge weeds. In certain embodiments, the compositions and methods provided herein are utilized to control undesirable vegetation including species in the following genera: *Melochia, Eleusine, Lolium and Panicum.*

In some embodiments, the combination of a pyridine carboxylic acid of formula (I), or an agriculturally acceptable salt or ester thereof, and 2,4 D, or agriculturally acceptable salt or ester thereof, are used to control *Melochia parviflora* (Escoba blanca, MEOPA), *Eleusine indica* (L.) Gaertn (goosegrass, ELEIN), *Lolium perenne* L. ssp. *multiflorum* (Lam.) Husnot (Italian ryegrass, LOLMU), and *Panicum dichotomiflorum* Michx. (fall panicum, PANDI). In some embodiments, the compositions are used to control GALAP, LAMAM, GAETE, CHEAL, DESSO, PAPRH, GALAP, STEME, GERSS, LAMSS, VERPE, PAPRH, ERIBO, ERICA, Conyza, GLXMA, or CHEAL.

The methods and compositions employing the combination of the benzyl ester, methyl ester, or potassium salt of the pyridine carboxylic acid and the dimethyl amine salt of 2,4-D and the compositions described herein may also be employed to control herbicide resistant or tolerant weeds. Exemplary resistant or tolerant weeds include, but are not limited to, biotypes resistant or tolerant to acetolactate synthase (ALS) inhibitors, photosystem II inhibitors, acetyl CoA carboxylase (ACCase) inhibitors, synthetic auxins, photosystem I inhibitors, 5-enolpyruvylshikimate-3-phosphate (EPSP) synthase inhibitors, microtubule assembly inhibitors, lipid synthesis inhibitors, protoporphyrinogen oxidase (PPO) inhibitors, carotenoid biosynthesis inhibitors, very long chain fatty acid (VLCFA) inhibitors, phytoene desaturase (PDS) inhibitors, glutamine synthetase inhibitors, 4-hydroxyphenyl-pyruvate-dioxygenase (HPPD) inhibitors, mitosis inhibitors, cellulose biosynthesis inhibitors, herbicides with multiple modes-of-action such as quinclorac, and unclassified herbicides such as arylaminopropionic acids, difenzoquat, endothall, and organoarsenicals. Exemplary resistant or tolerant weeds include, but are not limited to, biotypes with resistance or tolerance to multiple herbicides, multiple chemical classes, and multiple herbicide modes-of-action.

In some embodiments, the components are applied as a post-emergence foliar application to immature, undesirable vegetation to achieve the maximum control of weeds.

In certain embodiments, the compositions and methods provided herein utilize the methyl or benzyl ester of the compound of formula (I). In certain embodiments, the potassium salt of the compound of formula (I) is utilized.

In certain embodiments, the benzyl ester of the compound of formula (I) and the dimethyl amine salt of 2,4-D are utilized. In certain embodiments, the carboxylic acid equivalent weight ratio of the benzyl ester of compound (I) to the dimethyl amine (DMA) salt of 2,4-D (2,4D DMA) is from 1:56 to less than 1:10. In certain embodiments, the carboxylic acid equivalent weight ratio is from 1:28 to less than 1:10. In certain embodiments, the carboxylic acid equivalent weight ratio is from 1:28 to 1:14.

In certain embodiments, the methyl ester of the compound of formula (I) and the dimethyl amine salt of 2,4-D are utilized. In certain embodiments, the carboxylic acid equivalent weight ratio of the methyl ester of compound (I) to the dimethyl amine (DMA) salt of 2,4-D (2,4D DMA) is from 1:56 to less than 1:10. In certain embodiments, the carboxylic acid equivalent weight ratio is from 1:27 to 1:14.

In certain embodiments, the potassium salt ($K^+$) of the compound of formula (I) and dimethyl amine salt of 2,4-D are utilized. In certain embodiments, the carboxylic acid equivalent weight ratio of the potassium salt of the compound

of formula (I) and dimethyl amine salt of 2,4-D is 1:28 to less than 1:10. In certain embodiments, the carboxylic acid equivalent weight ratio is from 1:14 to less than 1:10. In certain embodiments, the carboxylic acid equivalent weight ratio is from 1:56 to less than 1:10.

The carboxylic acid equivalent weight ratio of the benzyl ester, methyl ester, or potassium salt of the compound of formula (I) and dimethyl amine salt of 2,4-D is less than 1:10, and in certain embodiments less than 1:15, 1:20, 1:25, 1:30, 1:35, 1:40, 1:45, 1:50, 1:55, or 1:60.

The rate at which the compositions are applied will depend upon the particular type of weed to be controlled, the degree of control required, and the timing and method of application. In one embodiment, the composition described herein can be applied at an application rate of from 62 grams acid equivalent per hectare (g ae/ha) to 2,950 g ae/ha based on the total amount of active ingredients in the composition. In another embodiment, the composition described herein can be applied at an application rate from 245 g ae/ha to 1170 g ae/ha based upon the total amount of active ingredients in the composition. In some embodiments, the pyridine carboxylic acid ester or salt of formula (I) is applied at a rate from 2 g ae/ha to 70 g ae/ha and the above 2,4-D salt is applied at a rate of 26 g ae/ha to 960 g ae/ha. In some embodiments, the pyridine carboxylic acid ester or salt of formula (I) is applied at a rate from 3.75 g ae/ha to 35 g ae/ha and the 2,4-D salt is applied at a rate of 52.5 g ae/ha to 480 g ae/ha. In one embodiment, the methyl ester of the pyridine carboxylic acid of formula (I) is applied at a rate from 17.5 g ae/ha to 35 g ae/ha and 2,4-D DMA is applied at a rate of 480 g ae/ha. In another embodiment, the methods utilize the benzyl ester of the pyridine carboxylic acid of formula (I) and the DMA salt of 2,4-D, wherein the benzyl ester of the compound of formula (I) is applied at a rate of 3.75 g ae/ha to 7.5 g ae/ha, and 2,4-D DMA is applied at a rate from 52.5 g ae/ha to 105 g ae/ha. In another embodiment, the methods utilize the potassium salt of the pyridine carboxylic acid of formula (I) and the DMA salt of 2,4-D, wherein the potassium salt of the compound of formula (I) is applied at a rate of 3.75 g ae/ha to 7.5 g ae/ha, and 2,4 D DMA is applied at a rate from 52.5 g ae/ha to 210 g ae/ha.

In some embodiments of the methods described herein, the ester or salt of the compound of formula I and the salt of 2,4-D are applied simultaneously, e.g., in the form of an intact composition. In some embodiments, the components are applied sequentially, e.g., within 5, 10, 15, or 30 minutes of each other; 1, 2, 3, 4, 5, 10, 12, 24, 48 hour(s) or each other, or 1 week of each other.

The compositions and methods of the present disclosure can be applied in conjunction with one or more other herbicides to control a wider variety of undesirable vegetation. When used in conjunction with other herbicides, the composition can be formulated with the other herbicide or herbicides, tank mixed with the other herbicide or herbicides or applied sequentially with the other herbicide or herbicides. Some of the herbicides that can be employed in conjunction with the synergistic composition of the present disclosure include, but are not limited to: 4-CPA; 4-CPB; 4-CPP; 3,4-DA; 2,4-DB; 3,4-DB; 2,4-DEB; 2,4-DEP; 3,4-DP; 2,3,6-TBA; 2,4,5-T; 2,4,5-TB; acetochlor, acifluorfen, aclonifen, acrolein, alachlor, allidochlor, alloxydim, allyl alcohol, alorac, ametridione, ametryn, amibuzin, amicarbazone, amidosulfuron, aminocyclopyrachlor, aminopyralid, amiprofos-methyl, amitrole, ammonium sulfamate, anilofos, anisuron, asulam, atraton, atrazine, azafenidin, azimsulfuron, aziprotryne, barban, BCPC, beflubutamid, benazolin, bencarbazone, benfluralin, benfuresate, bensulfuron, bensulide, bentazone, benzadox, benzfendizone, benzipram, benzobicyclon, benzofenap, benzofluor, benzoylprop, benzthiazuron, bicyclopyrone, bifenox, bispyribac, borax, bromacil, bromobonil, bromobutide, bromofenoxim, bromoxynil, brompyrazon, butachlor, butafenacil, butamifos, butenachlor, buthidazole, buthiuron, butralin, butroxydim, buturon, butylate, cacodylic acid, cafenstrole, calcium chlorate, calcium cyanamide, cambendichlor, carbasulam, carbetamide, carboxazole chlorprocarb, carfentrazone, CDEA, CEPC, chlomethoxyfen, chloramben, chloranocryl, chlorazifop, chlorazine, chlorbromuron, chlorbufam, chloreturon, chlorfenac, chlorfenprop, chlorflurazole, chlorflurenol, chloridazon, chlorimuron, chlornitrofen, chloropon, chlorotoluron, chloroxuron, chloroxynil, chlorpropham, chlorsulfuron, chlorthal, chlorthiamid, cinidon-ethyl, cinmethylin, cinosulfuron, cisanilide, clethodim, cliodinate, clodinafop, clofop, clomazone, clomeprop, cloprop, cloproxydim, clopyralid, cloransulam, CMA, copper sulfate, CPMF, CPPC, credazine, cresol, cumyluron, cyanatryn, cyanazine, cycloate, cyclosulfamuron, cycloxydim, cycluron, cyhalofop, cyperquat, cyprazine, cyprazole, cypromid, daimuron, dalapon, dazomet, delachlor, desmedipham, desmetryn, di-allate, dicamba, dichlobenil, dichloralurea, dichlormate, dichlorprop, dichlorprop-P, diclofop, diclosulam, diethamquat, diethatyl, difenopenten, difenoxuron, difenzoquat, diflufenican, diflufenzopyr, dimefuron, dimepiperate, dimethachlor, dimethametryn, dimethenamid, dimethenamid-P, dimexano, dimidazon, dinitramine, dinofenate, dinoprop, dinosam, dinoseb, dinoterb, diphenamid, dipropetryn, diquat, disul, dithiopyr, diuron, DMPA, DNOC, DSMA, EBEP, eglinazine, endothal, epronaz, EPTC, erbon, esprocarb, ethalfluralin, ethametsulfuron, ethidimuron, ethiolate, ethofumesate, ethoxyfen, ethoxysulfuron, etinofen, etnipromid, etobenzanid, EXD, fenasulam, fenoprop, fenoxaprop, fenoxaprop-P, fenoxasulfone, fenteracol, fenthiaprop, fentrazamide, fenuron, ferrous sulfate, flamprop, flamprop-M, flazasulfuron, florasulam, fluazifop, fluazifop-P, fluazolate, flucarbazone, flucetosulfuron, fluchloralin, flufenacet, flufenican, flufenpyr, flumetsulam, flumezin, flumiclorac, flumioxazin, flumipropyn, fluometuron, fluorodifen, fluoroglycofen, fluoromidine, fluoronitrofen, fluothiuron, flupoxam, flupropacil, flupropanate, flupyrsulfuron, fluridone, flurochloridone, fluroxypyr, flurtamone, fluthiacet, fomesafen, foramsulfuron, fosamine, furyloxyfen, , glyphosate, halosafen, halosulfuron, haloxydine, haloxyfop, haloxyfop-P, hexachloroacetone, hexaflurate, hexazinone, imazamethabenz, imazamox, imazapic, imazapyr,

imazaquin, imazethapyr, imazosulfuron, indanofan, indaziflam, iodobonil, iodomethane, iodosulfuron, iofensulfuron, ioxynil, ipazine, ipfencarbazone, iprymidam, isocarbamid, isocil, isomethiozin, isonoruron, isopolinate, isopropalin, isoproturon, isouron, isoxaben, isoxachlortole, isoxaflutole, isoxapyrifop, karbutilate, ketospiradox, lactofen, lenacil, linuron, MAA, MAMA, MCPA, MCPA-thioethyl, MCPB, mecoprop, mecoprop-P, medinoterb, mefenacet, mefluidide, mesoprazine, mesosulfuron, mesotrione, metam, metamifop, metamitron, metazachlor, metazosulfuron, metflurazon, methabenzthiazuron, methalpropalin, methazole, methiobencarb, methiozolin, methiuron, methometon, methoprotryne, methyl bromide, methyl isothiocyanate, methyldymron, metobenzuron, metobromuron, metolachlor, metosulam, metoxuron, metribuzin, metsulfuron, molinate, monalide, monisouron, monochloroacetic acid, monolinuron, monuron, morfamquat, MSMA, naproanilide, napropamide, naptalam, neburon, nicosulfuron, nipyraclofen, nitralin, nitrofen, nitrofluorfen, norflurazon, noruron, OCH, orbencarb, ortho-dichlorobenzene, orthosulfamuron, oryzalin, oxadiargyl, oxadiazon, oxapyrazon, oxasulfuron, oxaziclomefone, oxyfluorfen, parafluron, paraquat, pebulate, pelargonic acid, pendimethalin, penoxsulam, pentachlorophenol, pentanochlor, pentoxazone, perfluidone, pethoxamid, phenisopham, phenmedipham, phenmedipham-ethyl, phenobenzuron, phenylmercury acetate, picloram, picolinafen, pinoxaden, piperophos, potassium arsenite, potassium azide, potassium cyanate, pretilachlor, primisulfuron, procyazine, prodiamine, profluazol, profluralin, profoxydim, proglinazine, prometon, prometryn, propachlor, propanil, propaquizafop, propazine, propham, propisochlor, propoxycarbazone, propyrisulfuron, propyzamide, prosulfalin, prosulfocarb, prosulfuron, proxan, prynachlor, pydanon, pyraclonil, pyraflufen, pyrasulfotole, pyrazolynate, pyrazosulfuron, pyrazoxyfen, pyribenzoxim, pyributicarb, pyriclor, pyridafol, pyridate, pyriftalid, pyriminobac, pyrimisulfan, pyrithiobac, pyroxasulfone, pyroxsulam, quinclorac, quinmerac, quinoclamine, quinonamid, quizalofop, quizalofop-P, rhodethanil, rimsulfuron, saflufenacil, S-metolachlor, sebuthylazine, secbumeton, sethoxydim, siduron, simazine, simeton, simetryn, SMA, sodium arsenite, sodium azide, sodium chlorate, sulcotrione, sulfallate, sulfentrazone, sulfometuron, sulfosulfuron, sulfuric acid, sulglycapin, swep, TCA, tebutam, tebuthiuron, tefuryltrione, tembotrione, tepraloxydim, terbacil, terbucarb, terbuchlor, terbumeton, terbuthylazine, terbutryn, tetrafluron, thenylchlor, thiazafluron, thiazopyr, thidiazimin, thidiazuron, thiencarbazone-methyl, thifensulfuron, thiobencarb, tiocarbazil, tioclorim, topramezone, tralkoxydim, triafamone, tri-allate, triasulfuron, triaziflam, tribenuron, tricamba, triclopyr, tridiphane, trietazine, trifloxysulfuron, trifluralin, triflusulfuron, trifop, trifopsime, trihydroxytriazine, trimeturon, tripropindan, tritac tritosulfuron, vernolate, xylachlor and salts, choline salts, esters, optically active isomers and mixtures thereof.

The compositions and methods described herein can, further, be used in conjunction with glyphosate, glufosinate, dicamba, imidazolinones or 2,4-D on glyphosate-tolerant, glufosinate-tolerant, dicamba-tolerant, imidazolinone-tolerant or 2,4-D-tolerant crops. In one embodiment, the compositions and methods are used in combination with herbicides that are selective for the crop being treated and which complement the spectrum of weeds controlled by these compounds at the application rate employed. In another embodiment, the compositions and methods described herein and other complementary herbicides are applied at the same time, either as a combination formulation or as a tank mix. Similarly the herbicidal compounds of the present disclosure can be used in conjunction with acetolactate synthase inhibitors on acetolactate synthase inhibitor tolerant crops.

The compositions and methods of the present disclosure can be employed in combination with known herbicide safeners, such as benoxacor, benthiocarb, brassinolide, cloquintocet (acid or mexyl), cyometrinil, daimuron, dichlormid, dicyclonon, dimepiperate, disulfoton, fenchlorazole-ethyl, fenclorim, flurazole, fluxofenim, furilazole, harpin proteins, isoxadifen-ethyl, mefenpyr-diethyl, MG 191, MON 4660, naphthalic anhydride (NA), oxabetrinil, R29148 and *N*-phenylsulfonylbenzoic acid amides, to enhance their selectivity. In one embodiment, Cloquintocet (acid or mexyl) is used as a safener for the compositions and methods described herein, specifically antagonizing any harmful effect of the compositions.

In one embodiment, the compositions of the present disclosure is used in mixtures containing a herbicidally effective amount of the herbicidal components along with at least one agriculturally acceptable adjuvant or carrier. Suitable adjuvants or carriers should not be phytotoxic to valuable crops, particularly at the concentrations employed in applying the compositions for selective weed control in the presence of crops, and should not react chemically with herbicidal components or other composition ingredients. Such mixtures can be designed for application directly to weeds or their locus or can be concentrates or formulations that are normally diluted with additional carriers and adjuvants before application. They can be solids, such as, for example, dusts, granules, water-dispersible granules, or wettable powders, or liquids, such as, for example, emulsifiable concentrates, solutions, emulsions or suspensions. They can also be provided as a pre-mix or can be tank mixed.

Suitable agricultural adjuvants and carriers that are useful in preparing the herbicidal mixtures of the compositions described herein are well known to those skilled in the art. Some of these adjuvants include, but are not limited to, crop oil concentrate (mineral oil (85%) + emulsifiers (15%)); nonylphenol ethoxylate; benzylcocoalkyldimethyl quaternary ammonium salt; blend of petroleum hydrocarbon, alkyl esters, organic acid, and anionic surfactant; $C_9$-$C_{11}$ alkylpolyglycoside; phosphated alcohol ethoxylate; natural primary alcohol ($C_{12}$-$C_{16}$) ethoxylate; di-*sec*-butylphenol EO-PO block copolymer; polysiloxane-methyl cap; nonylphenol ethoxylate + urea ammonium nitrate; emulsified methylated seed oil; tridecyl alcohol (synthetic) ethoxylate (8EO); tallow amine ethoxylate (15 EO); PEG(400) dioleate-99.

Liquid carriers that can be employed include water and organic solvents. The organic solvents used include, but are not limited to, petroleum fractions or hydrocarbons such as mineral oil, aromatic solvents, and paraffinic oils, vegetable oils such as soybean oil, rapeseed oil, olive oil, castor oil, sunflower seed oil, coconut oil, corn oil, cottonseed oil, linseed oil, palm oil, peanut oil, safflower oil, sesame oil, and tung oil; esters of the above vegetable oils; esters of monoalcohols or dihydric, trihydric, or other lower polyalcohols (4-6 hydroxy containing), such as 2-ethyl hexyl stearate, *n*-butyl oleate, isopropyl myristate, propylene glycol dioleate, di-octyl succinate, di-butyl adipate, and di-octyl phthalate; and esters of mono, di and polycarboxylic acids. Specific organic solvents include toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol, ethylene glycol, propylene glycol, glycerine, N-methyl-2-pyrrolidinone, *N,N*-dimethyl alkylamides, dimethyl sulfoxide, and liquid fertilizers. In some embodiments, water is the carrier for the dilution of concentrates.

Suitable solid carriers include talc, pyrophyllite clay, silica, attapulgus clay, kaolin clay, kieselguhr, chalk, diatomaceous earth, lime, calcium carbonate, bentonite clay, Fuller's earth, cottonseed hulls, wheat flour, soybean flour, pumice, wood flour, walnut shell flour, and lignin.

In one embodiment, one or more surface-active agents are incorporated into the compositions of the present disclosure. Such surface-active agents are advantageously employed in both solid and liquid compositions, especially those designed to be diluted with carrier before application. The surface-active agents can be anionic, cationic or nonionic in character and can be employed as emulsifying agents, wetting agents, suspending agents, or for other purposes. Surfactants conventionally used in the art of formulation and which may also be used in the present formulations are described, *inter alia*, in "McCutcheon's Detergents and Emulsifiers Annual," MC Publishing Corp., Ridgewood, New Jersey, 1998 and in "Encyclopedia of Surfactants," Vol. I-III, Chemical Publishing Co., New York, 1980-81. Typical surface-active agents include salts of alkyl sulfates, such as diethanol-ammonium lauryl sulfate; alkylarylsulfonate salts, such as calciumdodecyl benzenesulfonate; alkylphenol-alkylene oxide addition products, such as nonylphenol-$C_{18}$ ethoxylate; alcohol-alkylene oxide addition products, such as tridecyl alcohol-$C_{16}$ ethoxylate; soaps, such as sodium stearate; alkyl-naphthalene-sulfonate salts, such as sodium dibutylnaphthalenesulfonate; dialkyl esters of sulfo-succinate salts, such as sodium di(2-ethylhexyl) sulfo-succinate; sorbitol esters, such as sorbitol oleate; quaternary amines, such as lauryl trimethyl-ammonium chloride; polyethylene glycol esters of fatty acids, such as polyethylene glycol stearate; block copolymers of ethylene oxide and propylene oxide; salts of mono and dialkyl phosphate esters; vegetable or seed oils such as soybean oil, rapeseed/canola oil, olive oil, castor oil, sunflower seed oil, coconut oil, corn oil, cottonseed oil, linseed oil, palm oil, peanut oil, safflower oil, sesame oil, and tung oil; and esters, including but not limited to, methyl esters of the above vegetable oils.

Some of these materials, such as vegetable or seed oils and their esters, can be used interchangeably as an agricultural adjuvant, as a liquid carrier or as a surface active agent.

Other additives used in agricultural compositions include compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, and antimicrobial agents. The compositions may also contain other compatible components, for example, other herbicides, plant growth regulants, fungicides, and insecticides, and can be formulated with liquid fertilizers or solid, particulate fertilizer carriers such as ammonium nitrate, and urea.

In one embodiment, the concentration of the active ingredients in the synergistic composition of the present disclosure is from 0.001 to 98 percent by weight, and in another embodiment, concentrations from 0.01 to 90 percent by weight are employed. In compositions designed to be employed as concentrates, the active ingredients are present in a concentration from 2 to 98 weight percent, and in another embodiment, from 5 to 90 weight percent. In one embodiment, such compositions are diluted with an inert carrier, such as water, before application. The diluted compositions described herein that are applied to weeds or the locus of weeds contain 0.004 to 10 weight percent active ingredient (ai) and, in another embodiment, contain 0.01 to 1.0 weight percent ai.

The present compositions can be applied to weeds or their locus by the use of conventional ground or aerial dusters, sprayers, and granule applicators, by addition to irrigation or paddy water, and by other conventional means known to those skilled in the art.

The following examples illustrate the present disclosure.

Examples

Greenhouse Evaluation of Postemergence Herbicidal Activity of Mixtures in Various Cropping Systems.

Seeds or nutlets of the desired test plant species were planted in a soil matrix prepared by mixing a sandy loam soil (28.6 percent silt, 18.8 percent clay, and 52.6 percent sand, with a pH of 5.8 and an organic matter content of 1.8

percent) and calcareous grit in an 80 to 20 ratio. The soil matrix was contained in plastic pots with a surface area of 84.6 $cm^2$ and a volume of 560 cubic centimeters ($cm^3$). When required to ensure good germination and healthy plants, a fungicide treatment and/or other chemical or physical treatment was applied. The plants were grown for 7-31 days (d) in a greenhouse with an 15 hour (h) photoperiod which was maintained at 23-29 °C during the day and 22-28 °C during the night. Nutrients (Peters Excel® 15-5-15 5-Ca 2-Mg) and water were added on a regular basis and supplemental lighting was provided with overhead metal halide 1000-Watt lamps as necessary. The plants were employed for testing when they reached the first, second, or third true leaf stage.

Treatment requirements were calculated based upon the rates being tested, the concentration of active ingredient or acid equivalent in the formulation, and a 12 mL application volume at a rate of 187 L/ha.

Treatments consisted of the potassium ($K^+$) salt of 4-amino-3-chloro-6-(4-chloro-2-fluoro-3-methoxy-phenyl)pyridine-2-carboxylic acid formulated as an SL or the benzyl ester of 4-amino-3-chloro-6-(4-chloro-2-fluoro-3-methoxyphenyl)pyridine-2-carboxylic acid as technical material, and 2,4-D dimethylamine (DMA) salt applied as Weedar® 64 EC alone and in combination.

For treatments comprised of formulated compounds, measured amounts of compounds were placed individually in 25 mL glass vials and diluted in a volume of 1.5% (v/v) Agri-dex® crop oil concentrated to obtain 6X stock solutions. If a test compound did not dissolve readily, the mixture was warmed and/or sonicated. Application solutions were prepared by adding an appropriate amount of each stock solution (typically 2 mL) and diluted to the appropriate final concentrations with the addition of an appropriate amount of an aqueous mixture of 1.5% (v/v) crop oil concentrate and an appropriate amount of water so that the final spray solutions contained 1.25+/-0.05% (v/v) crop oil concentrate.

For treatments comprised of formulated and technical compounds, weighed amounts of the technical materials were placed individually in 25 mL glass vials and dissolved in a volume of 97:3 v/v acetone/DMSO to obtain 6X stock solutions, and measured amounts of the formulated compounds were placed individually in 25 mL glass vials and diluted in a volume of 1.5% (v/v) crop oil concentrate to obtain 6X stock solutions. If a test compound did not dissolve readily, the mixture was warmed and/or sonicated. Application solutions were prepared by adding an appropriate amount of each stock solution (eg, 2 mL) and diluted to the appropriate final concentrations with the addition of an appropriate amount of an aqueous mixture of 1.5% (v/v) crop oil concentrate and an appropriate amount of water so that the final spray solutions contained 1.25% (v/v) crop oil concentrate. The final acetone and DMSO concentrations of the application solutions containing technical material were 16.2% and 0.5%, respectively.

All stock solutions and applications solutions were visually inspected for compound compatibility prior to application. Compound requirements are based upon a 12 mL application volume at a rate of 187 liters per hectare (L/ha). Application solutions were applied to the plant material with an overhead Mandel track sprayer equipped with 8002E nozzles calibrated to deliver 187 L/ha over an application area of 0.503 square meters ($m^2$) at a spray height of 45.72 to 50.8 cm (18 to 20 inches) above the average plant canopy height. Control plants were sprayed in the same manner with the solvent blank.

The treated plants and control plants were placed in a greenhouse as described above and watered by subirrigation to prevent wash-off of the test compounds. After 2 weeks, the condition of the test plants as compared with that of the untreated plants was determined visually and scored on a scale of 0 to 100 percent where 0 corresponds to no injury and 100 corresponds to complete kill.

Evaluation

Data were collected and analyzed using various statistical methods.

The Colby equation was used to determine the herbicidal effects expected from the mixtures (Colby, S. R. Calculation of the synergistic and antagonistic response of herbicide combinations. Weeds 1967, 15, 20-22.).

The following equation was used to calculate the expected activity of mixtures containing two active ingredients, A and B:

$$\text{Expected} = A + B - (A \times B/100)$$

A = observed efficacy of active ingredient A at the same concentration as used in the mixture.

B = observed efficacy of active ingredient B at the same concentration as used in the mixture.

Some of the compounds tested, application rates employed, plant species tested, and results are given in Tables 1 through 3.

Greenhouse Results

Table 1. Synergistic weed control of PANDI at 16 Days After Application (DAA) following a foliar treatment with pyridine carboxylic acid and 2,4-D herbicidal compositions to weeds common to row crops.

| Pyridine Carboxylic Acid (Potassium Salt) | 2,4-D (Dimethyl Amine) | DAA | PANDI* (% Control) | |
|---|---|---|---|---|
| (grams ae/ha)* | | | Obs* | Exp* |
| 3.75 | 0 | 16 | 75 | -- |
| 0 | 52.5 | 16 | 0 | -- |
| 0 | 105 | 16 | 0 | -- |
| 0 | 210 | 16 | 0 | -- |
| 3.75 | 52.5 | 16 | 95 | 75 |
| 3.75 | 105 | 16 | 95 | 75 |
| 3.75 | 210 | 16 | 95 | 75 |

Table 2. Synergistic weed control of LOLMU at 14 Days After Application (DAA) following a foliar treatment with pyridine carboxylic acid and 2,4-D herbicidal compositions to weeds common to row crops.

| Pyridine Carboxylic Acid (Potassium Salt) | 2,4-D (Dimethyl Amine) | DAA | LOLMU (% Control) | |
|---|---|---|---|---|
| (grams ae/ha)* | | | Obs* | Exp* |
| 3.75 | 0 | 14 | 15 | -- |
| 7.5 | 0 | 14 | 35 | -- |
| 0 | 52.5 | 14 | 0 | -- |
| 0 | 105 | 14 | 0 | -- |
| 3.75 | 52.5 | 14 | 25 | 15 |
| 7.5 | 52.5 | 14 | 40 | 35 |
| 3.75 | 105 | 14 | 20 | 15 |
| 7.5 | 105 | 14 | 50 | 35 |

Table 3. Synergistic weed control of ELEIN at 14 Days After Application (DAA) following a foliar treatment with pyridine carboxylic acid and 2,4-D herbicidal compositions to weeds common to row crops.

| Pyridine Carboxylic Acid (Benzyl Ester) | 2,4-D (Dimethyl Amine) | DAA | ELEIN (% Control) | |
|---|---|---|---|---|
| (grams ae/ha)* | | | Obs* | Exp* |
| 3.75 | 0 | 14 | 0 | -- |
| 7.5 | 0 | 14 | 25 | -- |
| 0 | 52.5 | 14 | 0 | -- |
| 0 | 105 | 14 | 0 | -- |
| 3.75 | 52.5 | 14 | 15 | 0 |
| 7.5 | 52.5 | 14 | 25 | 25 |
| 3.75 | 105 | 14 | 30 | 0 |

(continued)

| Pyridine Carboxylic Acid (Benzyl Ester) | 2,4-D (Dimethyl Amine) | DAA | ELEIN (% Control) | |
|---|---|---|---|---|
| (grams ae/ha)* | | | Obs* | Exp* |
| 7.5 | 105 | 14 | 60 | 25 |

MEOPA - escoba blanca (*Melochia parviflora*)
ELEIN- goosegrass (*Eleusine indica* (L.) Gaertn.)
LOLMU - Italian ryegrass (*Lolium perenne* L. ssp. *multiflorum* (Lam.) Husnot)
PANDI - fall panicum (*Panicum dichotomiflorum* Michx.)
g ae/ha = grams acid equivalent per hectare
Obs* = Observed percent weed control
Exp* = Expected weed control per Colby analysis

## Claims

1. A herbicidal composition comprising a herbicidally effective amount of (a) the benzyl ester, methyl ester, or potassium salt of a compound of the formula (I)

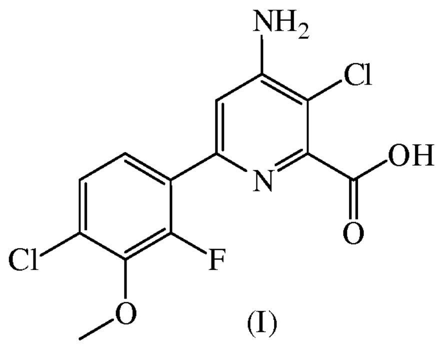

(I)

and (b) the dimethyl amine salt of 2,4-D, wherein the carboxylic acid equivalent weight ratio of the benzyl ester, methyl ester, or potassium salt of the compound of formula (I) to the dimethyl amine salt of 2,4-D is less than 1:10.

2. The herbicidal composition of claim 1 consisting of the herbicidally effective amount of (a) the benzyl ester, methyl ester, or potassium salt of the compound of the formula (I) and (b) the dimethyl amine salt of 2,4-D, and

- optionally one or more other herbicides selected from the group consisting of 4-CPA; 4-CPB; 4-CPP; 3,4-DA; 2,4-DB; 3,4-DB; 2,4-DEB; 2,4-DEP; 3,4-DP; 2,3,6-TBA; 2,4,5-T; 2,4,5-TB; acetochlor, acifluorfen, aclonifen, acrolein, alachlor, allidochlor, alloxydim, allyl alcohol, alorac, ametridione, ametryn, amibuzin, amicarbazone, amidosulfuron, aminocyclopyrachlor, aminopyralid, amiprofos-methyl, amitrole, ammonium sulfamate, anilofos, anisuron, asulam, atraton, atrazine, azafenidin, azimsulfuron, aziprotryne, barban, BCPC, beflubutamid, benazolin, bencarbazone, benfluralin, benfuresate, bensulfuron, bensulide, bentazone, benzadox, benzfendizone, benzipram, benzobicyclon, benzofenap, benzofluor, benzoylprop, benzthiazuron, bicyclopyrone, bifenox, bispyribac, borax, bromacil, bromobonil, bromobutide, bromofenoxim, bromoxynil, brompyrazon, butachlor, butafenacil, butamifos, butenachlor, buthidazole, buthiuron, butralin, butroxydim, buturon, butylate, cacodylic acid, cafenstrole, calcium chlorate, calcium cyanamide, cambendichlor, carbasulam, carbetamide, carboxazole chlorprocarb, carfentrazone, CDEA, CEPC, chlomethoxyfen, chloramben, chloranocryl, chlorazifop, chlorazine, chlorbromuron, chlorbufam, chloreturon, chlorfenac, chlorfenprop, chlorflurazole, chlorflurenol, chloridazon, chlorimuron, chlornitrofen, chloropon, chlorotoluron, chloroxuron, chloroxynil, chlorpropham, chlorsulfuron, chlorthal, chlorthiamid, cinidon-ethyl, cinmethylin, cinosulfuron, cisanilide, clethodim, cliodinate, clodinafop, clofop, clomazone, clomeprop, cloprop, cloproxydim, clopyralid, cloransulam, CMA, copper sulfate, CPMF, CPPC, credazine, cresol, cumyluron, cyanatryn, cyanazine, cycloate, cyclosulfamuron, cycloxydim, cycluron, cyhalofop, cyperquat, cyprazine, cyprazole, cypromid, daimuron, dalapon, dazomet, delachlor, desmedipham, desmetryn, di-allate, dicamba, dichlobenil, dichloralurea, dichlormate, dichlorprop, dichlorprop-P, diclofop, diclosulam, diethamquat, diethatyl, difenopenten, difenoxuron, difenzoquat, diflufenican, diflufenzopyr, dimefuron, dimepiperate, dimethachlor, dimethametryn, dimethenamid, dimethenamid-P, dimexano, dimidazon, dinitramine, dinofenate, dinoprop, dinosam, dinoseb, dinoterb, diphenamid, dipropetryn, diquat, disul, dithiopyr, diuron, DMPA, DNOC, DSMA, EBEP, eglinazine, endothal, epronaz, EPTC, erbon, esprocarb, ethalfluralin, ethametsulfuron, ethidimuron, ethiolate, ethofumesate, ethoxyfen, ethoxysulfuron, etinofen, etnipromid, etobenzanid, EXD, fenasulam, fenoprop, fenoxaprop, fenoxaprop-P, fenoxasulfone, fenteracol, fenthiaprop, fentrazamide, fenuron, ferrous sulfate, flamprop, flamprop-M, flazasulfuron, florasulam, fluazifop, fluazifop-P, fluazolate, flucarbazone, flucetosulfuron, fluchloralin, flufenacet, flufenican, flufenpyr, flumetsulam, flumezin, flumiclorac, flumioxazin, flumipropyn, fluometuron, fluorodifen, fluoroglycofen, fluoromidine, fluoronitrofen, fluothiuron, flupoxam, flupropacil, flupropanate, flupyrsulfuron, fluridone, flurochloridone, fluroxypyr, flurtamone, fluthiacet, fomesafen, foramsulfuron, fosamine, furyloxyfen, glyphosate, halosafen, halosulfuron, haloxydine, haloxyfop, haloxyfop-P, hexachloroacetone, hexaflurate, hexazinone, imazamethabenz, imazamox, imazapic, imazapyr, imazaquin, imazethapyr, imazosulfuron, indanofan, indaziflam, iodobonil, iodomethane, iodosulfuron, iofensulfuron, ioxynil, ipazine, ipfencarbazone, iprymidam, isocarbamid, isocil, isomethiozin, isonoruron, isopolinate, isopropalin, isoproturon, isouron, isoxaben, isoxachlortole, isoxaflutole, isoxapyrifop, karbutilate, ketospiradox, lactofen, lenacil, linuron, MAA, MAMA, MCPA, MCPA-thioethyl, MCPB, mecoprop, mecoprop-P, medinoterb, mefenacet, mefluidide, mesoprazine, mesosulfuron, mesotrione, metam, metamifop, metamitron, metazachlor, metazosulfuron, metflurazon, methabenzthiazuron, methalpropalin, methazole, methiobencarb, methiozolin, methiuron, methometon, methoprotryne, methyl bromide, methyl isothiocyanate, methyldymron, metobenzuron, metobromuron, metolachlor, metosulam, metoxuron, metribuzin, metsulfuron, molinate, monalide, monisouron, monochloroacetic acid, monolinuron, monuron, morfamquat, MSMA, naproanilide, napropamide, naptalam, neburon, nicosulfuron, nipyraclofen, nitralin, nitrofen, nitrofluorfen, norflurazon, noruron, OCH, orbencarb, ortho-dichlorobenzene, orthosulfamuron, oryzalin, oxadiargyl, oxadiazon, oxapyrazon, oxasulfuron, oxaziclomefone, oxyfluorfen, parafluron, paraquat, pebulate, pelargonic acid, pendimethalin, penoxsulam, pentachlorophenol, pentanochlor, pentoxazone, perfluidone, pethoxamid, phenisopham, phenmedipham, phenmedipham-ethyl, phenobenzuron, phenylmercury acetate, picloram, picolinafen, pinoxaden, piperophos, potassium arsenite, potassium azide, potassium cyanate, pretilachlor, primisulfuron, procyazine, prodiamine, profluazol, profluralin, profoxydim, proglinazine, prometon, prometryn, propachlor, propanil, propaquizafop, propazine, propham, propisochlor, propoxycarbazone, propyrisulfuron, propyzamide, prosulfalin, prosulfocarb, prosulfuron, proxan, prynachlor, pydanon, pyraclonil, pyraflufen, pyrasulfotole, pyrazolynate, pyrazosulfuron, pyrazoxyfen, pyribenzoxim, pyributicarb, pyriclor, pyridafol, pyridate, pyriftalid, pyriminobac, pyrimisulfan, pyrithiobac, pyroxasulfone, pyroxsulam, quinclorac, quinmerac, quinoclamine, quinonamid, quizalofop, quizalofop-P, rhodethanil, rimsulfuron, saflufenacil, S-metolachlor, sebuthylazine, secbumeton, sethoxydim, siduron, simazine, simeton, simetryn, SMA, sodium arsenite, sodium azide, sodium chlorate, sulcotrione, sulfallate, sulfentrazone, sulfometuron, sulfosulfuron, sulfuric acid, sulglycapin, swep, TCA, tebutam, tebuthiuron, tefuryltrione, tembotrione, tepraloxydim, terbacil, terbucarb, terbuchlor, terbumeton, terbuthylazine, terbutryn, tetrafluron, thenylchlor, thiazafluron, thiazopyr, thidiazimin, thidiazuron, thiencarbazone-methyl, thifensulfuron, thiobencarb, tiocarbazil, tioclorim, topramezone, tralkoxydim, triafamone, tri-allate, triasulfuron, triaziflam, tribenuron, tricamba, triclopyr, tridiphane, trietazine, trifloxysulfuron, trifluralin, triflusulfuron, trifop, trifopsime, trihydroxytriazine, trimeturon, tripropindan, tritac tritosulfuron, vernolate, xylachlor and salts, choline salts, esters, optically active isomers and mixtures thereof,

- optionally a herbicide safener,
- optionally an agriculturally acceptable adjuvant or carrier,
- optionally one or more surface-active agents,
- optionally other additives selected from the group consisting of compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, and antimicrobial agents, and
- and optionally liquid fertilizers or solid, particulate fertilizer carriers.

**3.** The composition of claim 1 or 2, wherein the composition comprises a herbicide safener.

**4.** The composition of claim 3, wherein the herbicide safener is cloquintocet mexyl or acid.

**5.** The composition of claim 1 or 2, wherein (a) is the methyl ester.

**6.** The composition of claim 1 or 2, wherein

- (a) is the methyl ester of the compound of formula (I), and the carboxylic acid equivalent weight ratio of the

methyl ester of the compound of formula (I) to the dimethyl amine salt of 2,4-D is from 1:56 to less than 1:10, or
- (a) is the benzyl ester of the compound of formula (I), and the carboxylic acid equivalent weight ratio of the benzyl ester of the compound of formula (I) to the dimethyl amine salt of 2,4-D is from 1:28 to less than 1:10, or
- (a) is the potassium salt of the compound of formula (I), and the carboxylic acid equivalent weight ratio of the potassium salt of the compound of formula (I) to the dimethyl amine salt of 2,4-D is from 1:56 to less than 1:10.

**7.** The composition of claim 6, wherein (a) is the methyl ester of the compound of formula (I) and the carboxylic acid equivalent weight ratio of the methyl ester of the compound of formula (I) to the dimethyl amine salt of 2,4-D is from 1:27 to 1:14.

**8.** The composition of claim 1 or 2, wherein the composition comprises an agriculturally acceptable adjuvant or carrier.

**9.** The composition of claim 1 or 2, wherein the composition is synergistic under the Colby equation.

**10.** A method of controlling undesirable vegetation comprising contacting the undesirable vegetation or area adjacent to the undesirable vegetation with a herbicidally effective amount the composition of claim 1 or 2.

**11.** The method of claim 10, wherein (a) is the methyl ester.

**12.** The method of claim 10, wherein the composition is a applied post-emergently or pre-emergently.

**13.** The method of claim 10, wherein the undesirable vegetation is *Melochia, Eleusine, Lolium* or *Panicum.*

**14.** The method of claim 13, wherein the undesirable vegetation is *Melochia parviflora* (Escoba blanca, MEOPA), *Eleusine indica* (L.) Gaertn (goosegrass, ELEIN), *Lolium perenne* L. ssp. *multiflorum* (Lam.) Husnot (Italian ryegrass, LOLMU), or *Panicum dichotomiflorum* Michx. (fall panicum, PANDI).

**Patentansprüche**

**1.** Eine herbizide Zusammensetzung umfassend eine herbizid wirksame Menge von (a) dem Benzylester, Methylester oder Kaliumsalz einer Verbindung der Formel (I),

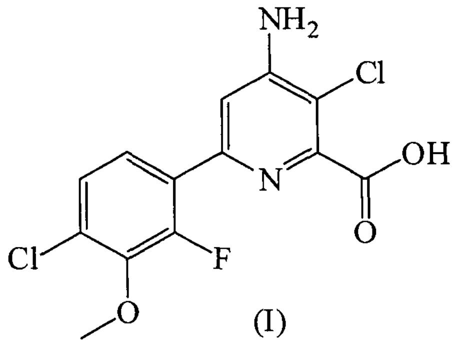

(I)

und (b) dem Dimethylaminsalz von 2,4-D, wobei das Carbonsäureäquivalent-Gewichtsverhältnis des Benzylesters, Methylesters oder Kaliumsalzes der Verbindung der Formel (I) zu dem Dimethylaminsalz von 2,4-D weniger als 1:10 beträgt.

**2.** Die herbizide Zusammensetzung gemäß Anspruch 1, welche aus der herbizid wirksamen Menge von (a) dem Benzylester, Methylester oder Kaliumsalz der Verbindung der Formel (I) und (b) dem Dimethylaminsalz von 2,4-D und

- wahlweise einem oder mehreren weiteren Herbiziden, ausgewählt aus der Gruppe bestehend aus 4-CPA; 4-CPB; 4-CPP; 3,4-DA; 2,4-DB; 3,4-DB; 2,4-DEB; 2,4-DEP; 3,4-DP; 2,3,6-TBA; 2,4,5-T; 2, 4,5-TB; Acetochlor, Acifluorfen, Aclonifen, Acrolein, Alachlor, Allidochlor, Alloxydim, Allylalkohol, Alorac, Ametridion, Ametryn, Amibuzin, Amicarbazon, Amidosulfuron, Aminocyclopyrachlor, Aminopyralid, Amiprofos-Methyl, Amitrol, Ammoniumsulfamat, Anilofos, Anisuron, Asulam, Atraton, Atrazin, Azafenidin, Azimsulfuron, Aziprotryn, Barban, BCPC, Beflubutamid, Benazolin, Bencarbazon, Benfluralin, Benfuresat, Bensulfuron, Bensulid, Bentazon, Benzadox,

Benzfendizon, Benzipram, Benzobicyclon, Benzofenap, Benzofluor, Benzoylprop, Benzthiazuron, Bicyclopyron, Bifenox, Bispyribac, Borax, Bromacil, Bromobonil, Bromobutid, Bromfenoxim, Bromoxynil, Brompyrazon, Butachlor, Butafenacil, Butamifos, Butenachlor, Buthidazol, Buthiuron, Butralin, Butroxydim, Buturon, Butylat, Dimethylarsinsäure, Cafenstrol, Calciumchlorat, Calciumcyanamid, Cambendichlor, Carbasulam, Carbetamid, Carboxazol, Chlorprocarb, Carfentrazon, CDEA, CEPC, Chlomethoxyfen, Chloramben, Chloranocryl, Chlorazifop, Chlorazin, Chlorbromuron, Chlorbufam, Chloreturon, Chlorfenac, Chlorfenprop, Chlorflurazol, Chlorflurenol, Chloridazon, Chlorimuron, Chlornitrofen, Chloropon, Chlortoluron, Chloroxuron, Chloroxynil, Chlorpropham, Chlorsulfuron, Chlorthal, Chlorthiamid, Cinidon-Ethyl, Cinmethylin, Cinosulfuron, Cisanilid, Clethodim, Cliodinat, Clodinafop, Clofop, Clomazon, Clomeprop, Cloprop, Cloproxydim, Clopyralid, Cloransulam, CMA, Kupfersulfat, CPMF, CPPC, Credazin, Kresol, Cumyluron, Cyanatryn, Cyanazin, Cycloat, Cyclosulfamuron, Cycloxydim, Cycluron, Cyhalofop, Cyperquat, Cyprazin, Cyprazol, Cypromid, Daimuron, Dalapon, Dazomet, Delachlor, Desmedipham, Desmetryn, Diallat, Dicamba, Dichlobenil, Dichloralharnstoff, Dichlormat, Dichlorprop, Dichlorprop-P, Diclofop, Diclosulam, Diethamquat, Diethatyl, Difenopenten, Difenoxuron, Difenzoquat, Diflufenican, Diflufenzopyr, Dimefuron, Dimepiperat, Dimethachlor, Dimethametryn, Dimethenamid, Dimethenamid-P, Dimexano, Dimidazon, Dinitramin, Dinofenat, Dinoprop, Dinosam, Dinoseb, Dinoterb, Diphenamid, Dipropetryn, Diquat, Disul, Dithiopyr, Diuron, DMPA, DNOC, DSMA, EBEP, Eglinazin, Endothal, Epronaz, EPTC, Erbon, Esprocarb, Ethalfluralin, Ethametsulfuron, Ethidimuron, Ethiolat, Ethofumesat, Ethoxyfen, Ethoxysulfuron, Etinofen, Etnipromid, Etobenzanid, EXD, Fenasulam, Fenoprop, Fenoxaprop, Fenoxaprop-P, Fenoxasulfon, Fenteracol, Fenthiaprop, Fentrazamid, Fenuron, Eisen(II)sulfat, Flamprop, Flamprop-M, Flazasulfuron, Florasulam, Fluazifop, Fluazifop-P, Fluazolat, Flucarbazon, Flucetosulfuron, Fluchloralin, Flufenacet, Flufenican, Flufenpyr, Flumetsulam, Flumezin, Flumiclorac, Flumioxazin, Flumipropyn, Fluometuron, Fluordifen, Fluorglycofen, Fluoromidin, Fluornitrofen, Fluothiuron, Flupoxam, Flupropacil, Flupropanat, Flupyrsulfuron, Fluridon, Flurochloridon, Fluroxypyr, Flurtamon, Fluthiacet, Fomesafen, Foramsulfuron, Fosamin, Furyloxyfen, Glyphosat, Halosafen, Halosulfuron, Haloxydin, Haloxyfop, Haloxyfop-P, Hexachloraceton, Hexaflurat, Hexazinon, Imazamethabenz, Imazamox, Imazapic, Imazapyr, Imazaquin, Imazethapyr, Imazosulfuron, Indanofan, Indaziflam, Iodobonil, Iodmethan, Iodsulfuron, Iofensulfuron, Ioxynil, Ipazin, Ipfencarbazon, Iprymidam, Isocarbamid, Isocil, Isomethiozin, Isonoruron, Isopolinat, Isopropalin, Isoproturon, Isouron, Isoxaben, Isoxachlortol, Isoxaflutol, Isoxapyrifop, Karbutilat, Ketospiradox, Lactofen, Lenacil, Linuron, MAA, MAMA, MCPA, MCPA-Thioethyl, MCPB, Mecoprop, Mecoprop-P, Medinoterb, Mefenacet, Mefluidid, Mesoprazin, Mesosulfuron, Mesotrion, Metam, Metamifop, Metamitron, Metazachlor, Metazosulfuron, Metflurazon, Methabenzthiazuron, Methalpropalin, Methazol, Methiobencarb, Methiozolin, Methiuron, Methometon, Methoprotryn, Methylbromid, Methylisothiocyanat, Methyldymron, Metobenzuron, Metobromuron, Metolachlor, Metosulam, Metoxuron, Metribuzin, Metsulfuron, Molinat, Monalid, Monisouron, Monochloressigsäure, Monolinuron, Monuron, Morfamquat, MSMA, Naproanilid, Napropamid, Naptalam, Neburon, Nicosulfuron, Nipyraclofen, Nitralin, Nitrofen, Nitrofluorfen, Norflurazon, Noruron, OCH, Orbencarb, *ortho*-Dichlorobenzol, Orthosulfamuron, Oryzalin, Oxadiargyl, Oxadiazon, Oxapyrazon, Oxasulfuron, Oxaziclomefon, Oxyfluorfen, Parafluron, Paraquat, Pebulat, Pelargonsäure, Pendimethalin, Penoxsulam, Pentachlorphenol, Pentanochlor, Pentoxazon, Perfluidone, Pethoxamid, Phenisopham, Phenmedipham, Phenmedipham-Ethyl, Phenobenzuron, Phenylquecksilberacetat, Picloram, Picolinafen, Pinoxaden, Piperophos, Kaliumarsenit, Kaliumazid, Kaliumcyanat, Pretilachlor, Primisulfuron, Procyazin, Prodiamin, Profluazol, Profluralin, Profoxydim, Proglinazin, Prometon, Prometryn, Propachlor, Propanil, Propaquizafop, Propazin, Propham, Propisochlor, Propoxycarbazon, Propyrisulfuron, Propyzamid, Prosulfalin, Prosulfocarb, Prosulfuron, Proxan, Prynachlor, Pydanon, Pyraclonil, Pyraflufen, Pyrasulfotol, Pyrazolynat, Pyrazosulfuron, Pyrazoxyfen, Pyribenzoxim, Pyributicarb, Pyriclor, Pyridafol, Pyridat, Pyriftalid, Pyriminobac, Pyrimisulfan, Pyrithiobac, Pyroxasulfon, Pyroxsulam, Quinclorac, Quinmerac, Quinoclamin, Quinonamid, Quizalofop, Quizalofop-P, Rhodethanil, Rimsulfuron, Saflufenacil, S-Metolachlor, Sebuthylazin, Secbumeton, Sethoxydim, Siduron, Simazin, Simeton, Simetryn, SMA, Natriumarsenit, Natririumazid, Natriumchlorat, Sulcotrion, Sulfallat, Sulfentrazon, Sulfometuron, Sulfosulfuron, Schwefelsäure, Sulglycapin, Swep, TCA, Tebutam, Tebuthiuron, Tefuryltrion, Tembotrion, Tepraloxydim, Terbacil, Terbucarb, Terbuchlor, Terbumeton, Terbuthylazin, Terbutryn, Tetrafluron, Thenylchlor, Thiazafluron, Thiazopyr, Thidiazimin, Thidiazuron, Thiencarbazone-Methyl, Thifensulfuron, Thiobencarb, Tiocarbazil, Tioclorim, Topramezon, Tralkoxydim, Triafamon, Triallat, Triasulfuron, Triaziflam, Tribenuron, Tricamba, Triclopyr, Tridiphan, Trietazin, Trifloxysulfuron, Trifluralin, Triflusulfuron, Trifop, Trifopsim, Trihydroxytriazin, Trimeturon, Tripropindan, Tritac, Tritosulfuron, Vernolat, Xylachlor und Salze, Cholinsalze, Ester, optisch aktive Isomere und Mischungen derselben,

- wahlweise einem Herbizidsafener,
- wahlweise einem landwirtschaftlich akzeptablen Hilfs- oder Trägerstoff,
- wahlweise einem oder mehreren oberflächenaktiven Mitteln,
- wahlweise weiteren Additiven, die aus der Gruppe bestehend aus Kompatibilisierungsmitteln, Schauminhibitoren, Komplexierungsmitteln, Neutralisationsmitteln und Puffern, Korrosionsinhibitoren, Farbstoffen, Duftstoffen, Spreitmitteln, Penetrierhilfen, Anhaftmitteln, Dispergiermitteln, Verdickungsmitteln, Gefrierpunkterniedrigern und antimikrobiellen Mitteln ausgewählt sind, und
- wahlweise flüssigen Düngemitteln oder festen, teilchenförmigen Düngemittelträgern

besteht.

**3.** Die Zusammensetzung gemäß Anspruch 1 oder 2, wobei die Zusammensetzung einen Herbizidsafener umfasst.

**4.** Die Zusammensetzung gemäß Anspruch 3, wobei der Herbizidsafener Cloquintocetmexyl oder die Cloquintocetsäure ist.

**5.** Die Zusammensetzung gemäß Anspruch 1 oder 2, wobei (a) der Methylester ist.

**6.** Die Zusammensetzung gemäß Anspruch 1 oder 2, wobei

- (a) der Methylester der Verbindung der Formel (I) ist und das Carbonsäureäquivalent-Gewichtsverhältnis des Methylesters der Verbindung der Formel (I) zu dem Dimethylaminsalz von 2,4-D von 1:56 bis weniger als 1:10 beträgt, oder
- (a) der Benzylester der Verbindung der Formel (I) ist und das Carbonsäureäquivalent-Gewichtsverhältnis des Benzylesters der Verbindung der Formel (I) zu dem Dimethylaminsalz von 2,4-D von 1:28 bis weniger als 1:10 beträgt, oder
- (a) das Kaliumsalz der Verbindung der Formel (I) ist und das Carbonsäureäquivalent-Gewichtsverhältnis des Kaliumsalzes der Verbindung der Formel (I) zu dem Dimethylaminsalz von 2,4-D von 1:56 bis weniger als 1:10 beträgt.

**7.** Die Zusammensetzung gemäß Anspruch 6, wobei (a) der Methylester der Verbindung der Formel (I) ist und das Carbonsäureäquivalent-Gewichtsverhältnis des Methylesters der Verbindung der Formel (I) zu dem Dimethylaminsalz von 2,4-D von 1:27 bis 1:14 beträgt.

**8.** Die Zusammensetzung gemäß Anspruch 1 oder 2, wobei die Zusammensetzung einen landwirtschaftlich akzeptablen Hilfs- oder Trägerstoff umfasst.

**9.** Die Zusammensetzung gemäß Anspruch 1 oder 2, wobei die Zusammensetzung synergistisch nach der Colby-Gleichung ist.

**10.** Ein Verfahren zur Bekämpfung unerwünschter Vegetation, welches das In-Kontakt-Bringen der unerwünschten Vegetation oder einer Fläche, die zu der unerwünschten Vegetation benachbart ist, mit einer herbizid wirksamen Menge der Zusammensetzung gemäß Anspruch 1 oder 2 umfasst.

**11.** Das Verfahren gemäß Anspruch 10, wobei (a) der Methylester ist.

**12.** Das Verfahren gemäß Anspruch 10, wobei die Zusammensetzung im Nachlauf oder im Vorlauf angewandt wird.

**13.** Das Verfahren gemäß Anspruch 10, wobei die unerwünschte Vegetation *Melochia, Eleusine, Lolium* oder *Panicum* ist.

**14.** Das Verfahren gemäß Anspruch 13, wobei die unerwünschte Vegetation *Melochia parviflora* (Kleinblättrige Melochie, MEOPA), *Eleusine indica* (L.) Gaertn (Indische Fingerhirse, ELEIN), *Lolium perenne* L. ssp. *multiflorum* (Lam.) Husnot (Italienisches Raygras, LOLMU), or *Panicum dichotomiflorum* Michx. (Gabelästige Hirse, PANDI) ist.

## Revendications

**1.** Composition herbicide comprenant, en une quantité à effet herbicide,

a) de l'ester de benzyle, de l'ester de méthyle ou du sel de potassium du composé de formule (I) :

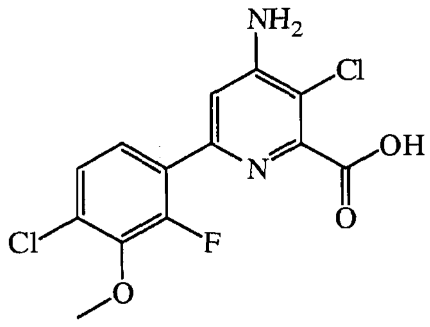

(I)

b) et du sel de diméthyl-amine de 2,4-D,

dans laquelle le rapport pondéral, en équivalents d'acide carboxylique, de l'ester de benzyle, de l'ester de méthyle ou du sel de potassium du composé de formule (I) au sel de diméthyl-amine de 2,4-D vaut moins de 1/10.

**2.** Composition herbicide conforme à la revendication 1, constituée de la quantité à effet herbicide du composant (a), ester de benzyle, ester de méthyle ou sel de potassium du composé de formule (I), et du composant (b), sel de diméthyl-amine de 2,4-D,

- en option, d'un ou de plusieurs autres herbicides choisis dans l'ensemble formé par les suivants : 4-CPA, 4-CPB, 4-CPP, 3,4-DA, 2,4-DB, 3,4-DB, 2,4-DEB, 2,4-DEP, 3,4-DP, 2,3,6-TBA, 2,4,5-T, 2,4,5-TB, acétochlore, acifluorfène, aclonifène, acroléine, alachlore, alidochlore, alloxydime, alcool allylique, alorac, amétridione, amétryne, amibuzine, amicarbazone, amidosulfuron, aminocyclopyrachlore, aminopyralide, amiprofos-méthyl, amitrole, sulfamate d'ammonium, anilofos, anisuron, asulame, atraton, atrazine, azafénidine, azimsulfuron, aziprotryne, barban, BCPC, béflubutamide, bénazoline, bencarbazone, benfluraline, benfurésate, bensulfuron, bensulide, bentazone, benzadox, benzfendizone, benziprame, benzobicyclone, benzofénap, benzofluor, benzoylprop, benzthiazuron, bicyclopyrone, bifénox, bispyribac, borax, bromacil, bromobonil, bromobutide, bromophénoxime, bromoxynil, brompyrazone, butachlor, butafénacile, butamifos, buténachlore, buthidazole, buthiuron, butraline, butroxydime, buturon, butilate, acide cacodylique, cafenstrole, chlorate de calcium, cyanamide calcique, cambendichlore, carbasulam, carbétamide, carboxazole, chlorprocarbe, carfentrazone, CDEA, CEPC, chlométhoxyfène, chlorambène, chloranocryl, chlorazifop, chlorazine, chlorbromuron, chlorbufame, chlorétu, chlorfénac, chlorfenprop, chlorflurazole, chlorflurénol, chloridazone, chlorimuron, chlornitrofène, chloropon, chlortoluron, chloroxuron, chloroxynil, chlorprophame, chlorsulfuron, chlorthal, chlortiamide, cinidon-éthyle, cinméthyline, cinosulfuron, cisanilide, cléthodime, cliodinate, clodinafop, clofop, clomazone, cloméprop, cloprop, cloproxydime, clopyralid, cloransulame, CMA, sulfate de cuivre, CPMF, CPPC, crédazine, crésol, cumyluron, cyanatryne, cyanazine, cycloate, cyclosulfamuron, cycloxydime, cycluron, cyhalofop, cyperquat, cyprazine, cyprazole, cypromide, daimuron, dalapon, dazomet, délachlore, desmédiphame, desmétryne, diallate, dicamba, dichlobénil, dichloralurée, dichlormate, dichlorprop, dichlorprop-P, diclofop, diclosulame, diéthamquat, diéthatyl, difénopentène, difénoxuron, difenzoquat, diflufénican, diflufenzopyr, diméfuron, dimépipérate, diméthachlore, diméthamétryne, diméthénamide, diméthénamide-P, diméxano, dimidazone, dinitramine, dinofénate, dinoprop, dinosame, dinosèbe, dinoterbe, difénamide, dipropétryne, diquat, disul, dithiopyr, diuron, DMPA, DNOC, DSMA, EBEP, églinazine, endothal, épronaz, EPTC, erbon, esprocarb, éthalfluraline, éthamétsulfuron, éthidimuron, éthiolate, éthofumesate, éthoxyfène, éthoxysulfuron, étinofène, etnipromide, étobenzanide, EXD, fénasulame, fénoprop, fénoxaprop, fénoxaprop-P, fénoxasulfone, fentéracol, fentiaprop, fentrazamide, fénuron, sulfate ferreux, flamprop, flamprop-M, flazasulfuron, florasulame, fluazifop, fluazifop-P, fluazolate, flucarbazone, flucétosulfuron, fluchloraline, flufénacet, flufénican, flufenpyr, flumétsulame, flumézine, flumiclorac, flumioxazine, flumipropyne, fluométuron, fluorodifène, fluoroglycofène, fluromidine, fluoronitrofène, fluothiuron, flupoxame, flupropacil, flupropanate, flupyrsulfuron, fluridone, flurochloridone, fluoroxypyr, flurtamone, fluthiacet, fomésafène, foramsulfuron, fosamine, furyloxyfène, glyphosate, halosafène, halosulfuron, haloxydine, haloxyfop, haloxyfop-P, hexachloracétone, hexaflurate, hexazinone, imazaméthabenz, imazamox, imazapic, imazapyr, imazaquine, imazéthapyr, imazosulfuron, indanofan, indaziflame, iodobonil, iodure de méthyle, iodosulfuron, iofensulfuron, ioxynil, ipazine, ipfencarbazone, iprymidam, isocarbamide, isocil, isométhiozine, isonoruron, isopolinate, isopropaline, isoproturon, isouron, isoxabène, isoxachlortole, isoxaflutole, isoxapyrifop, karbutilate, kétospiradox, lactofène, lénacile, linuron, MAA, MAMA, MCPA, MCPA-thioéthyl, MCPB, mécoprop, mécoprop-P, médinoterbe, méfénacet, méfluidide, mésoprazine, mésosulfuron, mésotrione, métam, métamifop, métamitrone, métazachlore, métazosulfuron, metflurazone, méthabenzthiazuron, méthalpropaline, méthazole, méthiobencarbe, méthiozoline, méthiuron, méthométon, méthoprotryne, bromure de méthyle, isothiocyanate de méthyle, méthyldymron, métobenzuron, métobromuron, métolachlore, métosulame, métoxuron, métribuzine, metsulfuron, molinate, monalide, monisouron, acide monochloracétique, monolinuron, monuron, morfamquat, MSMA, naproanilide, napropamide, naptalame, néburon, nicosulfuron, nipyraclofène, nitralin, nitrofène, nitrofluorfène, norflurazone, noruron, OCH, orbencarb, ortho-dichlorobenzène, orthosulfamuron, oryzalin, oxadiargyl, oxadiazon, oxapyrazone, oxasulfuron, oxaziclomefone, oxyfluorfène, parafluron, paraquat, pébulate, acide pélargonique, pendiméthaline, pénoxsulame, pentachlorophénol, pentanochlore, pentoxazone, perfluidone, péthoxamide, phénisophame, phenmédiphame, phenmédiphame-éthyl, phénobenzuron, acétate de phényl-mercure, piclorame, picolinafène, pinoxadène, pipérophos, arsénite de potassium, azoture de potassium, cyanate de potassium, prétilachlore, primisulfuron, procyazine, prodiamine, profluazol, profluraline, profoxydime, proglinazine, prométone, prométryne, propachlore, propanil, propaquizafop, propazine, prophame, propisochlore, propoxycarbazone, propyrisulfuron, propyzamide, prosulfaline, prosulfocarbe, prosulfuron, proxane, prynachlore, pydanon, pyraclonile, pyraflufène, pyrasulfotole, pyrazolynate, pyrazosulfuron, pyrazoxyfène, pyribenzoxime, pyributicarbe, pyriclor, pyridafol, pyridate, pyriftalide, pyriminobac, pyrimisulfan, pyrithiobac, pyroxasulfone, pyroxsulame, quinclorac, quinmérac, quinoclamine, quinonamide, quizalofop, quizalofop-P, rodéthanil, rimsulfuron, saflufénacile, S-métolachlore, sébuthylazine, secbuméthon, séthoxydime, siduron, simazine, simétone, simétryne, SMA, arsénite de sodium, azoture de sodium, chlorate de sodium, sulcotrione, sulfallate, sulfentrazone, sulfométuron, sulfosulfuron, acide sulfurique, sulglycapin, swep, TCA, tébutame, tébuthiuron, téfuryltrione, tembotrione, tépraloxydime, terbacil, terbucarbe, terbuchlore, terbuméton, terbuthylazine, terbutryne, tétrafluron, thénylchlore, thiazafluron, thiazopyr, thidiazimine, thidiazuron, thiencarbazone-méthyl, thifensulfuron, thiobencarbe, tiocarbazil, tioclorime, topramézone, tralkoxydime, triafamone, triallate, triasulfuron, triaziflame, tribénuron, tricamba, triclopyr, tridifane, triétazine, trifloxysulfuron, trifluraline, triflusulfuron, trifop, trifopsime, trioxytriazine, triméturon, tripropindane, tritac, tritosulfuron, vernolate, xylachlore, et leurs sels, sels de choline, esters et isomères optiquement actifs, et leurs mélanges,

- en option, d'un agent phyto-protecteur anti-herbicide,
- en option, d'un adjuvant ou véhicule admissible en agriculture,
- en option, d'un ou plusieurs agents tensioactifs,
- en options, d'autres adjuvants choisis dans l'ensemble formé par les agents de compatibilisation, agents anti-moussage, agents séquestrants, agents de neutralisation et agents tampons, inhibiteurs de corrosion, colorants, aromatisants, agents d'étalement, auxiliaires de pénétration, agents collants, agents dispersants, agents épaississants, agents d'abaissement du point de congélation, et agents anti-microbiens,
- et en option, d'agents fertilisants liquides ou de supports fertilisants solides en particules.

**3.** Composition conforme à la revendication 1 ou 2, laquelle composition comprend un agent phyto-protecteur anti-herbicide.

**4.** Composition conforme à la revendication 3, dans laquelle l'agent phyto-protecteur anti-herbicide est du cloquintocet-mexyl ou de l'acide cloquintocet.

**5.** Composition conforme à la revendication 1 ou 2, dans laquelle le composant (a) est l'ester de méthyle.

**6.** Composition conforme à la revendication 1 ou 2, dans laquelle

- le composant (a) est l'ester de méthyle du composé de formule (I), et le rapport pondéral, en équivalents d'acide carboxylique, de l'ester de méthyle du composé de formule (I) au sel de diméthyl-amine de 2,4-D vaut de 1/56 à moins de 1/10,
- ou le composant (a) est l'ester de benzyle du composé de formule (I), et le rapport pondéral, en équivalents d'acide carboxylique, de l'ester de benzyle du composé de formule (I) au sel de diméthyl-amine de 2,4-D vaut de 1/28 à moins de 1/10,
- ou le composant (a) est le sel de potassium du composé de formule (I), et le rapport pondéral, en équivalents d'acide carboxylique, du sel de potassium du composé de formule (I) au sel de diméthyl-amine de 2,4-D vaut de 1/56 à moins de 1/10.

**7.** Composition conforme à la revendication 6, dans laquelle le composant (a) est l'ester de méthyle du composé de formule (I), et le rapport pondéral, en équivalents d'acide carboxylique, de l'ester de méthyle du composé de formule (I) au sel de diméthyl-amine de 2,4-D vaut de 1/27 à 1/14.

**8.** Composition conforme à la revendication 1 ou 2, laquelle composition comprend un adjuvant ou véhicule admissible en agriculture.

**9.** Composition conforme à la revendication 1 ou 2, laquelle composition est une composition synergique régie par l'équation de Colby.

**10.** Procédé de lutte contre des végétaux indésirables, comprenant le fait de mettre des végétaux indésirables, ou une zone adjacente à des végétaux indésirables, en contact avec une composition conforme à la revendication 1 ou 2, utilisée en une quantité à effet herbicide.

**11.** Procédé conforme à la revendication 10, dans lequel le composant (a) est l'ester de méthyle.

**12.** Procédé conforme à la revendication 10, dans lequel la composition est appliquée après levée ou avant levée.

**13.** Procédé conforme à la revendication 10, dans lequel les végétaux indésirables sont du genre *Melochia, Eleusine, Lolium* ou *Panicum.*

**14.** Procédé conforme à la revendication 13, dans lequel les végétaux indésirables sont *Melochia parviflora* (Escoba Blanca, MEOPA), *Eleusine indica* (L.) Gaertn (chiendent pied-de-poule, ELEIN), Lolium perenne L. ssp. *multiflorum* (Lam.) Husnot (ray-grass italien, LOLMU), ou *Panicum dichotomiflorum* Michx. (panic d'automne, PANDI).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20110287932 A1
- US 20110287934 A1
- US 7314849 B


### Non-patent literature cited in the description


- Herbicide Handbook. Weed Science Society of America, 2007, 429
- The Pesticide Manual. 2009, vol. 2, 4
- McCutcheon's Detergents and Emulsifiers Annual. MC Publishing Corp, 1998
- Encyclopedia of Surfactants. Chemical Publishing Co, 1980, vol. 81, I-III
- *Weeds,* 1967, vol. 15, 20-22